(19) Europäisches Patentamt
European Patent Office
Office européen des brevets

(11) **EP 4 510 265 A1**

(12) **EUROPEAN PATENT APPLICATION**
published in accordance with Art. 153(4) EPC

(43) Date of publication:
**19.02.2025 Bulletin 2025/08**

(21) Application number: **22962318.6**

(22) Date of filing: **18.10.2022**

(51) International Patent Classification (IPC):
**H01M 10/0525** (2010.01)   **H01M 10/0568** (2010.01)

(52) Cooperative Patent Classification (CPC):
**H01M 10/0525; H01M 10/0568**

(86) International application number:
**PCT/CN2022/125847**

(87) International publication number:
**WO 2024/082123 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **FU, Hanli**
**Ningde, Fujian 352100 (CN)**

• **LI, Zhenhua**
**Ningde, Fujian 352100 (CN)**
• **LI, Xing**
**Ningde, Fujian 352100 (CN)**
• **TANG, Qiangqiang**
**Ningde, Fujian 352100 (CN)**
• **NIU, Shaojun**
**Ningde, Fujian 352100 (CN)**
• **JIN, Haizu**
**Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **ELECTROLYTE SOLUTION, SECONDARY BATTERY, BATTERY MODULE, BATTERY PACK, AND ELECTRIC DEVICE**

(57)   The present application relates to an electrolyte solution. The electrolyte solution comprises an organic solvent and an electrolyte salt dissolved in the organic solvent, wherein the electrolyte salt comprises an alkali metal double salt, and the alkali metal double salt contains a lithium ion and at least one other alkali metal ion other than the lithium ion. The present application also relates to a corresponding secondary battery, battery module, battery pack and electric device. According to the electrolyte solution, an alkali metal double salt containing a lithium ion and at least one other alkali metal ion other than the lithium ion is used in an electrolyte salt, such that the cycle performance of a secondary battery can be effectively improved, and the cycle life of the secondary battery is prolonged; and extra impurities cannot be introduced, such that side reactions cannot be caused.

EP 4 510 265 A1

**Description**

**Technical Field**

The present application relates to the technical field of secondary batteries, and in particular to an electrolyte, a secondary battery, a battery module, a battery pack and a power consuming device.

**Background Art**

In recent years, with the increasing application range of secondary ion batteries, secondary batteries have been widely used in energy storage power systems such as hydraulic power, thermal power, wind power, and solar power stations, as well as many fields such as electric tools, electric bicycles, electric motorcycles, electric vehicles, military equipment, and aerospace. Due to the great development of secondary batteries, higher requirements have also been placed on the secondary ions in terms of cycle life.

With the increasing demand for energy density, the demand for and the design and use of ternary positive electrodes have changed from the earliest low-nickel materials to current high-nickel materials; however, the overall lifetime of high-nickel materials is poor. The reasons therefor lie in that on the one hand, an increase in a nickel content will necessarily leads to more lithium-nickel intermixing, thus reducing the cycle life of batteries; and on the other hand, solid electrolyte interphase (SEI) films formed by conventional lithium salt electrolytes and located on the surfaces of electrodes have a low organic lithium content, and the low organic lithium content will lead to the co-intercalation of solvent molecules, thus destroying electrode materials, such that the cycle life of secondary batteries is reduced.

An electrolyte is an important component of a secondary battery, determines the composition and structure of an SEI film, and has an important impact on the stability of the electrode structure and the cycle life of the secondary battery, optimizing the design on an electrolyte is a main means to improve the cycle life of a secondary battery. Therefore, it is one of the research directions of great concern to those skilled in the art to seek an electrolyte which can better improve the cycle life of a secondary battery.

**Summary of the Invention**

The present application has been made in view of the above issues, and is based on an object of providing an electrolyte, a secondary battery, a battery module, a battery pack and a power consuming device, and a secondary battery comprising the electrolyte is enabled to have a relatively long cycle life.

In order to achieve the above object, a first aspect of the present application provides an electrolyte, comprising an organic solvent and an electrolyte salt dissolved in the organic solvent, wherein the electrolyte salt comprises an alkali metal double salt, the alkali metal double salt containing lithium ions and at least one other alkali metal ion other than lithium ions.

In any embodiment, the other alkali metal ion in the alkali metal double salt include sodium ions and potassium ions.

In any embodiment, the alkali metal double salt contains both sodium ions and potassium ions.

In any embodiment, the alkali metal double salt comprises one or more of $Li_aNa_bK_cPF_6$, $Li_aNa_bK_cBOB$, $Li_aNa_bK_cODFB$, $Li_aNa_bK_cTFOP$, $Li_aNa_bK_cPO_2F_2$, $Li_aNa_bK_cTFSI$, $Li_aNa_bK_cFSI$, and $Li_aNa_bK_cBODFP$, wherein

$$a + b + c = 1, \text{ and } 0.5 \leq a < 1.$$

In any embodiment, the electrolyte salt further contains a basic lithium salt, which comprises one or more of $LiPF_6$, LiBOB, LiODFB, LiTFOP, $LiPO_2F_2$, LiTFSI, LiFSI, and LiBODFP.

In any embodiment, the mass ratio of the basic lithium salt to the alkali metal double salt in the electrolyte salt is X : 1, wherein

$$0.65 \leq X < 1.$$

In any embodiment, $0.7 \leq X < 0.9$.

In any embodiment, the anion types of the basic lithium salt and the alkali metal double salt are the same.

In any embodiment, the amount-of-sub stance concentration of the electrolyte salt in the electrolyte is 0.5 mol/L to 2 mol/L.

In any embodiment, the organic solvent comprises one or more of dimethyl carbonate, methyl ethyl carbonate, methyl propyl carbonate, methyl formate, methyl acetate, methyl butyrate, ethyl propionate, ethylene carbonate, propylene carbonate, and diethyl carbonate.

A second aspect of the present application further provides a secondary battery, comprising an electrolyte in the first aspect of the present application.

In any embodiment, a positive electrode active material in a positive electrode plate of the secondary battery is a positive electrode active material with a layered structure.

A third aspect of the present application further provides a battery module, comprising a secondary battery in the second aspect of the present application.

A fourth aspect of the present application further provides a battery pack, comprising a battery module in the third aspect of the present application.

A fifth aspect of the present application further provides a power consuming device, comprising at least one selected from a secondary battery in the second aspect of the present application, a battery module in the third aspect of the present application or a battery pack in the fourth aspect of the present application.

In the electrolyte of the present application, the alkali metal double salt comprises lithium ions and at least one alkali metal ion other than the lithium ions are used in the electrolyte salt. On the one hand, alkali metal ions (such as sodium ions and potassium ions) other than lithium in the alkali metal double salt have a radius larger than that of lithium, and can be intercalated into some of the lithium sites of a layered positive electrode during the initial discharging process, thus improving the stability of a layered structure and preventing the Li/Ni intermixing of the layered positive electrode, such that the cycling performance of the secondary battery is improved. On the other hand, sodium ions, potassium ions, etc., in the alkali metal double salt facilitate to improve the composition of organic lithium in SEI when an SEI film is being formed during the initial charging and discharging, such that the co-intercalation of solvent molecules can be effectively ameliorated, damage to electrode materials caused by the co-intercalation of solvent molecules can be avoided, and the cycling performance of the electrodes can be greatly improved. Moreover, some of lithium sites in the lithium salt are replaced with a sodium salt, a potassium salt, etc., having a larger ion radius; sodium ions and potassium ions can occupy the same spatial position and have the same energy level as lithium ions do, sodium ions and potassium ions occupying lithium sites in situ in the lithium salt have more stable structures, lithium holes provide stable space for storing sodium and potassium, and the failure rate of the deintercalation and intercalation of sodium ions and potassium ions at corresponding lithium sites is reduced, which are beneficial to the more long-lasting action of sodium and potassium ions; and when being deintercalated during charging and discharging, the ions have the same motion trajectories, such that the cycle life of battery cells can be quantitatively improved without introducing additional impurities and causing side reactions.

## Brief Description of the Drawings

Fig. 1 shows a schematic diagram of a secondary battery according to an embodiment of the present application.
Fig. 2 shows an exploded view of the secondary battery according to an embodiment of the present application as shown in Fig. 1.
Fig. 3 shows a schematic diagram of a battery module according to an embodiment of the present application.
Fig. 4 shows a schematic diagram of a battery pack according to an embodiment of the present application.
Fig. 5 shows an exploded view of the battery pack according to an embodiment of the present application as shown in Fig. 4.

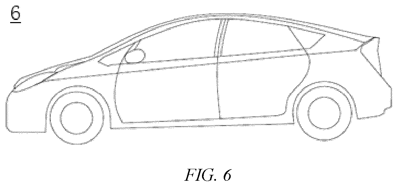

Fig. 6 shows a schematic diagram of a power consuming device using a secondary battery according to an embodiment of the present application as a power source.

Description of reference signs:
1 - battery pack; 2 - upper box body; 3 - lower box body; 4 - battery module; 5 - secondary battery; 51 - housing; 52 - electrode assembly; 53 - cover plate; 6 - power consuming device.

## Detailed Description of Embodiments

Hereafter, embodiments of the electrolyte, secondary battery, battery module, battery pack, and power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed in the text, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are openended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

At present, due to the great development of secondary batteries, higher requirements have also been placed on the secondary batteries in terms of cycling performance. Secondary batteries with excellent cycling performance have high requirements for electrolytes. Therefore, it is one of the research directions of great concern to those skilled in the art to seek an electrolyte which can better improve the cycling performance of a secondary battery.

With the increasing demand for the energy density of secondary batteries, ternary positive electrode materials are mostly high-nickel materials, but the overall life of high-nickel materials is generally poor. On the one hand, an increase in the nickel content will necessarily lead to more lithium-nickel intermixing, thus reducing the cycle life of secondary batteries. On the other hand, an SEI film formed by a conventional lithium salt electrolyte has a low organic lithium content, which easily leads to the co-intercalation of solvent molecules, such that electrode materials are damaged, and the cycle life of secondary batteries is thus reduced.

The inventors have found an electrolyte during the research wherein an alkali metal double salt is used in an electrolyte salt of the electrolyte, the alkali metal double salt containing lithium ions and other alkali metal ions (such as sodium and potassium) other than lithium ions. The electrolyte can effectively improve the cycling performance of a secondary battery and prolong the cycle life of the secondary battery.

In some embodiments, a first aspect of the present application provides an electrolyte, comprising an organic solvent and an electrolyte salt dissolved in the organic solvent, wherein the electrolyte salt comprises an alkali metal double salt, the alkali metal double salt containing lithium ions and at least one other alkali metal ion other than lithium ions.

In the electrolyte of the present application, the alkali metal double salt containing lithium ions and at least one other alkali metal ion other than lithium ions are used in the electrolyte salt. The other alkali metal ion (such as sodium ions and potassium ions) other than lithium in the alkali metal double salt has a radius larger than that of lithium, and can be intercalated into some of lithium sites of a layered positive electrode during the initial discharging process, thus improving the stability of a layered structure and preventing the Li/Ni intermixing of the layered positive electrode, such that the cycling performance of a secondary battery is improved.

On the other hand, sodium ions, potassium ions, etc., in the alkali metal double salt facilitate to improve the composition of organic lithium in SEI when an SEI film is being formed during the initial charging and discharging, such that the co-intercalation of solvent molecules can be effectively ameliorated, damage to electrode materials caused by the co-intercalation of solvent molecules can be avoided, and the cycling performance of electrodes can be greatly improved.

If a sodium salt, a potassium salt, etc., are directly added to a lithium salt as an electrolyte salt, on the one hand, in a production process for the electrolyte, additional pipelines and additional introduction and purification procedures are needed to introduce the sodium salt, potassium salt, etc., and the series of procedures require additional equipment introduction support and increase the production cost; on the other hand, simply adding the sodium salt and potassium salt to the lithium salt gives rise to considerable free sodium and potassium ions in the electrolyte, these sodium and potassium ions are not bound by ionic bonds, and the ions are likely to move irregularly, such that the improvement of an SEI film cannot be quantitatively controlled; moreover, simply adding the sodium salt and potassium salt will introduce additional anions. In the same solvent, the type of metal salt will change the thermodynamic stability and solvation structure of an electrolyte, thus affecting the decomposition behavior of the electrolyte, such that the characteristics of an electrode| electrolyte interface and the electrochemical performance of electrodes are changed. Different anions are different in electronegativity, and anions will enter a solvation layer and participate in solvation structure reactions, which will accelerate the decomposition of an electrolyte and cause irreversible loss.

In this application, some of lithium sites in the lithium salt are replaced with alkali metal double salts such as sodium salts and potassium salts having a larger ionic radius. Compared with the direct addition of a sodium salt and a potassium salt to the lithium salt, sodium ions and potassium ions in the alkali metal double salt can occupy the same spatial position and have the same energy level as lithium ions do, sodium ions and potassium ions occupying lithium sites in situ in the lithium salt have more stable structures, lithium holes provide stable space for storing sodium and potassium, and the failure rate of the deintercalation and intercalation of sodium ions and potassium ions at corresponding lithium sites is reduced, which are beneficial to more long-lasting action of sodium and potassium ions; and when being deintercalated during charging and discharging, the ions have the same motion trajectories, such that the cycle life of the secondary battery can be quantitatively improved without introducing extra impurities and causing side reactions.

In some embodiments, other alkali metal ions in the alkali metal double salt include sodium ions and potassium ions. It can be understood that the other alkali metal ions may further include alkali metal ions such as rubidium ions and cesium ions.

In some embodiments, the alkali metal double salt contains both sodium ions and potassium ions. That is, the alkali metal double salt comprises two or more other alkali metal ions, and the two or more other alkali metal ions include sodium ions and potassium ions.

In some embodiments, the alkali metal double salt comprises one or more of $Li_aNa_bK_cPF_6$, $Li_aNa_bK_cBOB$, $Li_aNa_bK_cODFB$, $Li_aNa_bK_cTFOP$, $Li_aNa_bK_cPO_2F_2$, $Li_aNa_bK_cTFSI$, $Li_aNa_bK_cFSI$, and $Li_aNa_bK_cBODFP$, wherein a + b + c = 1, and $0.5 \leq a < 1$. Therefore, the other alkali metal in the above-mentioned alkali metal double salt are sodium and potassium. When the above-mentioned alkali metal double salt is used as the electrolyte salt, the cycle life of the secondary battery can be effectively improved. Herein, a, b, and c respectively represent the atomic numbers of lithium, sodium and potassium in the above molecular formulas of the alkali metal double salt.

It can be understood that in the above "$0.5 \leq a < 1$", the value includes the minimum value and the maximum value of the range, and every value between the minimum value and the maximum value. Specific examples include, but are not limited to, point values in the embodiments and 0.6, 0.7, 0.8, and 0.9.

In any embodiment, the electrolyte salt further contains a basic lithium salt, which comprises one or more of $LiPF_6$, LiBOB, LiODFB, LiTFOP, $LiPO_2F_2$, LiTFSI, LiFSI, and LiBODFP. Therefore, the electrolyte salt contains both the alkali metal double salt and the basic lithium salt. It can be understood that in some other embodiments, the electrolyte salt may comprise only the alkali metal double salt and comprise no basic lithium salt described above.

Further, when the electrolyte salt contains both the alkali metal double salt and the basic lithium salt, the anions in the alkali metal double salt and anions in the basic lithium salt are of the same type.

In any embodiment, the mass ratio of the basic lithium salt to the alkali metal double salt in the electrolyte salt is X : 1, wherein $0.65 \leq X < 1$. It can be understood that the mass content of the basic lithium salt in the electrolyte salt is less than that of the alkali metal double salt.

It can be understood that in the above "$0.65 \leq X < 1$", the value includes the minimum value and the maximum value of the range, and every value between the minimum value and the maximum value. Specific examples include, but are not limited to, point values in the embodiments and 0.68, 0.70, 0.72, 0.75, 0.78, 0.80, 0.82, 0.85, 0.88, 0.90, 0.92, 0.95, and 0.98.

In any embodiment, $0.7 \leq X < 0.9$.

In any embodiment, the amount-of-sub stance concentration of the electrolyte salt in the electrolyte is 0.5 mol/L to 2 mol/L.

In any embodiment, the organic solvent comprises one or more of dimethyl carbonate, methyl ethyl carbonate, methyl propyl carbonate, methyl formate, methyl acetate, methyl butyrate, ethyl propionate, ethylene carbonate, propylene carbonate, and diethyl carbonate. That is, the organic solvent in the electrolyte may comprise any one of the above-mentioned organic solvents, and may also comprise two or more of the above-mentioned organic solvents at the same time.

A second aspect of the present application further provides a secondary battery, comprising an electrolyte in the first aspect of the present application. Therefore, the secondary battery has good cycling performance and a long cycle life.

In any embodiment, a positive electrode active material in a positive electrode plate of the secondary battery is a positive electrode active material with a layered structure.

A third aspect of the present application further provides a battery module, comprising a secondary battery in the second aspect of the present application.

A fourth aspect of the present application further provides a battery pack, comprising a battery module in the third aspect of the present application.

A fifth aspect of the present application further provides a power consuming device, comprising at least one selected from a secondary battery in the second aspect of the present application, a battery module in the third aspect of the present application or a battery pack in the fourth aspect of the present application.

The secondary battery, battery module, battery pack, and power consuming device of the present application will be described below by appropriately referring to the accompanying drawings.

In one embodiment of the present application, a secondary battery is provided.

Generally, a secondary battery comprises a positive electrode plate, a negative electrode plate, an electrolyte, and a separator. During the charge/discharge of the battery, active ions are intercalated and de-intercalated back and forth between the positive electrode plate and the negative electrode plate. The electrolyte functions to conduct ions between the positive electrode plate and the negative electrode plate. The separator is arranged between the positive electrode plate and the negative electrode plate and mainly functions to prevent the positive and negative electrodes from short-circuiting while enabling ions to pass through.

[Positive electrode plate]

The positive electrode plate includes a positive electrode current collector and a positive electrode film layer provided on at least one surface of the positive electrode current collector, the positive electrode film layer including a positive electrode active material.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector may be formed by forming a metal material on the polymer material substrate. Herein, the metal material include, but is not limited to, aluminum, an aluminum alloy, nickel, a nickel alloy, titanium, a titanium alloy, silver, a silver alloy, etc. The polymer material substrate (such as polypropylene (PP), polyethylene terephthalate (PET), polybutylene terephthalate (PBT), polystyrene (PS), and polyethylene (PE)).

In some embodiments, the positive electrode active material may comprise a positive electrode active material known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or as a combination of two or more. Herein, examples of lithium transition metal oxides may include, but are not limited to, at least one of lithium cobalt oxide (e.g., $LiCoO_2$), lithium nickel oxide (e.g., $LiNiO_2$), lithium manganese oxide (e.g., $LiMnO_2$, $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g., $LiNi_{0.85}Co_{0.15}Al_{0.05}O_2$), and modified compounds thereof, etc. Examples of lithium-containing phosphates of olivine structure may include, but are not limited to, at least one of lithium iron phosphate (e.g., $LiFePO_4$ (also referred to as LFP)), lithium iron phosphate and carbon composites, lithium manganese phosphate (e.g., $LiMnPO_4$), lithium manganese phosphate and carbon composites, lithium iron manganese phosphate, and lithium iron manganese phosphate and carbon composites.

The weight ratio of the positive electrode active material in the positive electrode film layer is 80-100 wt%, based on the total weight of the positive electrode film layer.

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The weight ratio of the binder in the positive electrode film layer is 0-20 wt%, based on the total weight of the positive electrode film layer.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers. The weight ratio of the conductive agent in the positive electrode film layer is 0-20 wt%, based on the total weight of the positive electrode film layer.

In some embodiments, the positive electrode plate can be prepared by the above-mentioned components for preparing the positive electrode plate, such as the positive electrode active material, the conductive agent, the binder and any other components, are dispersed in a solvent (e.g., N-methylpyrrolidone) to form a positive electrode slurry, wherein the positive electrode slurry has a solid content of 40-80 wt%, and the viscosity at room temperature thereof is adjusted to 5,000-25,000 mPa·s; and the positive electrode slurry is coated onto the surface of the positive electrode current collector, dried and then cold pressed by means of a cold-rolling mill to form a positive electrode plate, wherein the unit surface density of the positive electrode powder coating is 150-350 mg/m$^2$, and the positive electrode plate has a compacted density of 3.0-3.6 g/cm$^3$, optionally 3.3-3.5 g/cm$^3$.

The compacted density is calculated according to the following equation:

the compacted density = the surface density of the coating/(the thickness of the electrode plate after pressing - the thickness of the current collector).

[Negative electrode plate]

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material substrate and a metal layer formed on at least one surface of the polymer material substrate. The composite current collector may be formed by forming a metal material on the polymer material substrate. Herein, the metal material includes, but is not limited to, copper, a copper alloy, nickel, a nickel alloy, titanium, a titanium alloy, silver, a silver alloy, etc., and the polymer material substrate includes but is not limited to polypropylene (PP), polyethylene terephthalate (PET), polybutylene terephthalate (PBT), polystyrene (PS), polyethylene (PE), and other substrates.

In some embodiments, the negative electrode active material can be a negative electrode active material known in the art for batteries. As an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The weight ratio of the binder in the negative electrode film layer is 0-30 wt%, based on the total weight of the negative electrode film layer.

In some embodiments, the negative electrode film layer may optionally comprise a conductive agent. The conductive agent may be selected from at least one of superconducting carbon, acetylene black, carbon black, Ketjen black, carbon dots, carbon nanotubes, graphene, and carbon nanofibers. The weight ratio of the conductive agent in the negative electrode film layer is 0-20 wt%, based on the total weight of the negative electrode film layer.

In some embodiments, the negative electrode film layer may optionally comprise other auxiliary agents, such as thickeners (e.g., sodium carboxymethyl cellulose (CMC-Na)), etc. The weight ratio of the other auxiliary agents in the negative electrode film layer is 0-15 wt%, based on the total weight of the negative electrode film layer.

In some embodiments, the negative electrode plate can be prepared by the above-mentioned components for preparing the negative electrode plate, such as the negative electrode active material, the conductive agent, the binder and any other components, being dispersed in a solvent (e.g., deionized water) to form a negative electrode slurry, wherein the negative electrode slurry has a solid content of 30-70 wt%, and the viscosity at room temperature thereof is adjusted to 2,000-10,000 mPa.s; and the resulting negative electrode slurry being coated onto a negative electrode current collector, followed by a drying procedure and cold pressing (e.g., double rollers), so as to obtain the negative electrode plate. The unit surface density of the negative electrode powder coating is 75-220 mg/m$^2$, and the negative electrode plate has a compacted density of 1.2-2.0 g/m$^3$.

[Electrolyte]

The electrolyte functions to conduct ions between the positive electrode plate and the negative electrode plate. The electrolyte of the present application is used in the secondary battery of the present application. The electrolyte comprises an electrolyte salt and an organic solvent, wherein the electrolyte salt comprises an alkali metal double salt, the alkali metal double salt comprising lithium ions and at least one alkali metal ion other than lithium ions.

In some embodiments, the alkali metal double salt comprises one or more of $Li_aNa_bK_cPF_6$, $Li_aNa_bK_cBOB$, $Li_aNa_bK_cODFB$, $Li_aNa_bK_cTFOP$, $Li_aNa_bK_cPO_2F_2$, $Li_aNa_bK_cTFSI$, $Li_aNa_bK_cFSI$, and $Li_aNa_bK_cBODFP$, wherein $a + b + c = 1$, and $0.5 \leq a < 1$.

In some embodiments, the electrolyte salt further comprises a basic lithium salt, which comprises one or more of $LiPF_6$, LiBOB, LiODFB, LiTFOP, $LiPO_2F_2$, LiTFSI, LiFSI, and LiBODFP.

In some embodiments, the mass ratio of the basic lithium salt to the alkali metal double salt in the electrolyte salt is X : 1, wherein $0.65 \leq X < 1$.

In some embodiments, the organic solvent comprises one or more of ethylene carbonate, propylene carbonate, and diethyl carbonate.

In some embodiments, the electrolyte further optionally comprises an additive. For example, the additive may include a negative electrode film-forming additive and a positive electrode film-forming additive, and may further include an additive that can improve certain performances of the battery, such as an additive that improves the overcharge performance of the battery, or an additive that improves the high-temperature or low-temperature performance of the battery.

[Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene, and polyvinylidene fluoride. The separator may be either a single-layer film or a multi-layer composite film, and is not limited particularly. When the separator is a multi-layer composite film, the materials in the respective layers may be the same or different, which is not limited particularly.

In some embodiments, the separator has a thickness of 6-40 $\mu$m, optionally 12-20 $\mu$m.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

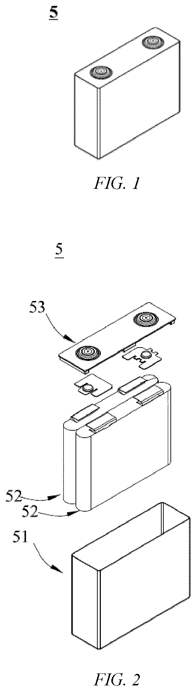

The shape of the secondary battery is not particularly limited in the present application and may be cylindrical, square or of any other shape. For example, Figure 1 shows a secondary battery 5 with a square structure as an example.

In some embodiments, with reference to Figure 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a stacking process to form an electrode assembly 52. The electrode assembly 52 is encapsulated in the accommodating cavity. The electrolyte infiltrates the electrode assembly 52. The number of the electrode assemblies 52 contained in the secondary battery 5 may be one or more, and can be selected by those skilled in the art according to actual requirements.

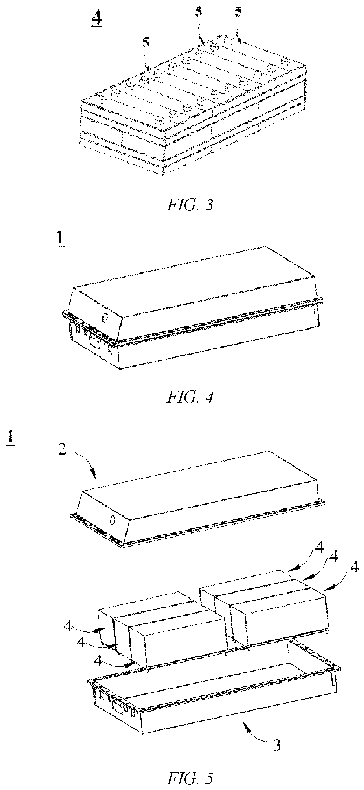

In some embodiments, with reference to Figure 3, the secondary battery 5 can be assembled into a battery module 4, and the number of the secondary batteries 5 contained in the battery module 4 may be one or more, and the specific number can be selected by those skilled in the art according to the application and capacity of the battery module 4.

In the battery module 4, a plurality of secondary batteries 5 may be arranged sequentially along a length direction of the battery module 4. Apparently, the secondary batteries may also be arranged in any other manner. Furthermore, the plurality of secondary batteries 5 may be fixed by fasteners.

Optionally, the battery module 4 may further comprise an outer housing with an accommodating space, and the plurality of secondary batteries 5 are accommodated in the accommodating space.

In some embodiments, with reference to Figures 4 and 5, the above-mentioned battery module 4 may also be assembled into a battery pack 1, the number of the battery modules 4 contained in the battery pack 1 may be one or more, and the specific number can be selected by those skilled in the art according to the application and capacity of the battery pack 1.

The battery pack 1 may include a battery box and a plurality of battery modules 4 provided in the battery box. The battery box comprises an upper box body 2 and a lower box body 3, where the upper box body 2 may cover the lower box body 3 to form a closed space for accommodating the battery modules 4. The plurality of the battery modules 4 may be arranged in the battery box in any manner.

In addition, the present application further provides a power consuming device 6. The power consuming device 6 comprises at least one of the secondary battery 5, the battery module 4, or the battery pack 1 provided in the present application. The secondary battery 5, the battery module 4 or the battery pack 1 may be used as a power supply of the power consuming device 6 or as an energy storage unit of the power consuming device 6. The power consuming device 6 may include a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, an energy storage system, etc., but is not limited thereto.

As for the power consuming device 6, the secondary battery 5, battery module 4 or battery pack 1 can be selected according to the usage requirements thereof.

Figure 4 shows a power consuming device 6 as an example. The power consuming device 6 may be a pure electric vehicle, a hybrid electric vehicle, a plug-in hybrid electric vehicle, etc. In order to meet the requirements of the power consuming device 6 for a high power and a high energy density of the secondary battery 5, the battery pack 1 or the battery module 4 may be used.

As another example, the device may be a mobile phone, a tablet computer, a laptop computer, etc. The device is generally required to be thin and light, and may have the secondary battery 5 used as a power source.

Examples

In order to make the technical problems solved by the present application, the technical solutions and the beneficial effects clearer, further detailed description of the present application will be given below with reference to the examples and the accompanying drawings. Apparently, the described examples are merely some, rather than all, of the examples of the present application. The following description of at least one exemplary example is merely illustrative in nature and is in no way to limit the present application and the use thereof. All other examples obtained by those of ordinary skill in the art based on the examples of the present application without involving any inventive effort shall fall within the scope of protection of the present application.

The examples in which techniques or conditions are not specified are based on the techniques or conditions described in documents in the art or according to the product instructions. The reagents or instruments used therein on which no manufacturers are specified are all commercially available conventional products.

**Example 1:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.5}Na_{0.3}K_{0.2}PF_6$. An electrolyte with a concentration of 1 M was prepared. Herein, the electrolyte salt of $Li_{0.5}Na_{0.3}K_{0.2}PF_6$ could be prepared by using a hydrogen fluoride solvent method, and the reaction process thereof could be expressed as follows:

$$(0.5LiF + 0.3NaF + 0.2KF) + PF_5 + CH_3CN \rightarrow Li_{0.5}Na_{0.3}K_{0.2}(CH_3CN)_4PF_6 \rightarrow Li_{0.5}Na_{0.3}K_{0.2}PF_6$$

Preparation of positive electrode plate of secondary battery: 1) Polyvinylidene fluoride (PVDF), a layered-structured positive active material of $LiNi_{0.6}Co_{0.2}Mn_{0.2}O_2$ and a conductive agent of carbon black Super P were mixed at a mass ratio of 90 : 5 : 5, N-methylpyrrolidone (NMP) was used as a solvent, and the added amount of the solvent was adjusted to control the viscosity of a slurry at 100 mPa.s to 20,000 mPa.s. The slurry was coated onto a positive electrode current collector with a coater or sprayer, followed by drying at 85°C, cold pressing, and then cold pressing, slicing and slitting, then drying at 85°C under vacuum conditions for 4 hours, and a tab being welded, so as to prepare a secondary battery positive electrode plate meeting the requirements.

Preparation of negative electrode plate of secondary battery: A negative electrode active material of graphite, a conductive agent of Super-P, a thickener of CMC and a binder of SBR were added to a solvent of deionized water at a mass ratio of 96.5 : 1.0 : 1.0 : 1.5 and mixed until uniform to prepare a negative electrode slurry; and the negative electrode slurry was then coated onto a current collector of a copper foil and dried at 85°C, followed by edge-cutting, slicing and slitting, same was then dried at 110°C under vacuum conditions for 4 hours, and a tab being welded, so as to prepare a secondary battery negative electrode plate meeting the requirements.

Preparation of secondary battery: With a 12-$\mu$m polypropylene film as a separator, the positive electrode plate, the separator and the negative electrode plate were stacked in sequence to enable the separator to function for isolation between the positive and negative electrode plates, and were then wound to obtain a square bare cell. The bare cell was packed with an aluminum foil, the electrolyte was then injected therein, followed by vacuum packaging, and multiple times of charging and discharging to complete the preparation of the secondary battery.

**Example 2:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.5}Na_{0.3}K_{0.2}BOB$. An electrolyte with a concentration of 1 M was prepared. The electrolyte salt $Li_{0.5}Na_{0.3}K_{0.2}BOB$ could be prepared by using a hydrogen fluoride solvent method.

The preparation of a positive electrode plate, a negative electrode plate and a secondary battery was the same as example 1.

**Example 3:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.5}Na_{0.3}K_{0.2}ODFB$. An electrolyte with a concentration of 1 M was prepared. The electrolyte salt $Li_{0.5}Na_{0.3}K_{0.2}ODFB$ could be prepared by using a hydrogen fluoride solvent method.

The preparation of a positive electrode plate, a negative electrode plate and a secondary battery was the same as example 1.

**Example 4:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.5}Na_{0.3}K_{0.2}TFOP$. An electrolyte with a concentration of 1 M was prepared. The electrolyte salt $Li_{0.5}Na_{0.3}K_{0.2}TFOP$ could be prepared by using a hydrogen fluoride solvent method.

The preparation of a positive electrode plate, a negative electrode plate and a secondary battery was the same as example 1.

**Example 5:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.5}Na_{0.3}K_{0.2}PO_2F_2$. An electrolyte with a concentration of 1 M was prepared. The electrolyte salt $Li_{0.5}Na_{0.3}K_{0.2}PO_2F_2$ could be prepared by using a hydrogen fluoride solvent method.

The preparation of a positive electrode plate, a negative electrode plate and a secondary battery was the same as example 1.

**Example 6:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.5}Na_{0.3}K_{0.2}TFSI$. The electrolyte with a concentration of 1 M was prepared. The electrolyte salt $Li_{0.5}Na_{0.3}K_{0.2}TFSI$ could be prepared by using a hydrogen fluoride solvent method.

The preparation of a positive electrode plate, a negative electrode plate and a secondary battery was the same as example 1.

**Example 7:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.5}Na_{0.3}K_{0.2}FSI$. The electrolyte with a concentration of 1 M was prepared. The electrolyte salt $Li_{0.5}Na_{0.3}K_{0.2}FSI$ could be prepared by using a hydrogen fluoride solvent method.

The preparation of a positive electrode plate, a negative electrode plate and a secondary battery was the same as example 1.

**Example 8:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.5}Na_{0.3}K_{0.2}BODFP$. The electrolyte with a concentration of 1 M was prepared. The electrolyte salt $Li_{0.5}Na_{0.3}K_{0.2}BODFP$ could be prepared by using a hydrogen fluoride solvent method.

The preparation of a positive electrode plate, a negative electrode plate and a secondary battery was the same as example 1.

**Example 9:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.7}Na_{0.2}K_{0.1}PF_6$. The electrolyte with a concentration of 1 M was prepared. Herein, the electrolyte salt $Li_{0.7}Na_{0.2}K_{0.1}PF_6$ could be prepared by using a hydrogen fluoride solvent method.

The preparation of a positive electrode plate, a negative electrode plate and a secondary battery was the same as example 1.

**Example 10:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.8}Na_{0.1}K_{0.1}PF_6$. The electrolyte with a concentration of 1 M was prepared. Herein, the electrolyte salt $Li_{0.8}Na_{0.1}K_{0.1}PF_6$ could be prepared by using a hydrogen fluoride solvent method.

The preparation of a positive electrode plate, a negative electrode plate and a secondary battery was the same as example 1.

**Example 11:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.9}Na_{0.05}K_{0.05}PF_6$. The electrolyte with a concentration of 1 M was prepared. Herein, the electrolyte salt $Li_{0.9}Na_{0.05}K_{0.05}PF_6$ could be prepared by using a hydrogen fluoride solvent method.

The preparation of a positive electrode plate, a negative electrode plate and a secondary battery was the same as example 1.

**Example 12:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. Electrolyte salts in the electrolyte were $LiPF_6$ and $Li_{0.5}Na_{0.3}K_{0.2}PF_6$. The mass ratio $LiPF_6$ to $Li_{0.5}Na_{0.3}K_{0.2}PF_6$ was 0.7 : 1, and an electrolyte with a concentration of 1 M was prepared.

The preparation of a positive electrode plate, a negative electrode plate and a secondary battery was the same as example 1.

**Example 13:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. Electrolyte salts in the electrolyte were LiBOB and $Li_{0.5}Na_{0.3}K_{0.2}BOB$. The mass ratio of LiBOB to $Li_{0.5}Na_{0.3}K_{0.2}BOB$ was 0.8 : 1, and an electrolyte with a concentration of 1 M was prepared.

The preparation of a positive electrode plate, a negative electrode plate and a secondary battery was the same as example 1.

**Example 14:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. Electrolyte salts in the electrolyte were LiODFB and $Li_{0.5}Na_{0.3}K_{0.2}ODFB$. The mass ratio of LiODFB to $Li_{0.5}Na_{0.3}K_{0.2}ODFB$ was 0.9 : 1, and an electrolyte with a concentration of 1 M was prepared.
The preparation of a positive electrode plate, a negative electrode plate and a secondary battery was the same as example 1.

**Example 15:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.5}Na_{0.5}PF_6$. The electrolyte with a concentration of 1 M was prepared.
The preparation of a positive electrode plate, a negative electrode plate and a secondary battery was the same as example 1.

**Example 16:**

Preparation of electrolyte of secondary battery: A mixture of dimethyl carbonate, methyl ethyl carbonate and methyl propyl carbonate was used as an organic solvent, wherein the mass ratio of the components was dimethyl carbonate : methyl ethyl carbonate : methyl propyl carbonate = 20 : 30 : 40. An electrolyte salt in the electrolyte was $Li_{0.5}K_{0.5}BOB$. an electrolyte with a concentration of 0.5 M was prepared.
The preparation of a positive electrode plate, a negative electrode plate and a secondary battery was the same as example 1.

**Example 17:**

Preparation of electrolyte of secondary battery: A mixture of methyl formate, methyl acetate and methyl butyrate was used as an organic solvent, wherein the mass ratio of the components was methyl formate : methyl acetate : methyl butyrate = 30 : 20 : 30. An electrolyte salt in the electrolyte was $Li_{0.5}Na_{0.5}ODFB$. The electrolyte with a concentration of 1.5 M was prepared.
The preparation of a positive electrode plate, a negative electrode plate and a secondary battery was the same as example 1.

**Example 18:**

Preparation of electrolyte of secondary battery: A mixture of ethyl propionate, ethylene carbonate and propylene carbonate was used as organic solvent, wherein the mass ratio of the components was ethyl propionate : ethylene carbonate : propylene carbonate = 30 : 20 : 50. An electrolyte salt in the electrolyte was $Li_{0.5}K_{0.5}TFOP$. The electrolyte with a concentration of 2 M was prepared.
The preparation of a positive electrode plate, a negative electrode plate and a secondary battery was the same as example 1.

**Example 19:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.5}Na_{0.5}PO_2F_2$. The electrolyte with a concentration of 0.8 M was prepared.
The preparation of a positive electrode plate, a negative electrode plate and a secondary battery was the same as example 1.

**Example 20:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.5}Na_{0.5}TFSI$. The electrolyte with a concentration of 1.2 M was prepared.

The preparation of a positive electrode plate, a negative electrode plate and a secondary battery was the same as example 1.

**Example 21:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 20 : 20 : 40. An electrolyte salt in the electrolyte was $Li_{0.5}K_{0.5}FSI$. The electrolyte with a concentration of 1 M was prepared.

The preparation of a positive electrode plate, a negative electrode plate and a secondary battery was the same as example 1.

**Example 22:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 20 : 20 : 40. An electrolyte salt in the electrolyte was $Li_{0.5}Na_{0.5}BODFP$. The electrolyte with a concentration of 1.8 M was prepared.

The preparation of a positive electrode plate, a negative electrode plate and a secondary battery was the same as example 1.

**Example 23:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 20 : 20 : 40. An electrolyte salt in the electrolyte was $Li_{0.7}K_{0.3}PF_6$. The electrolyte with a concentration of 0.9 M was prepared.

The preparation of a positive electrode plate, a negative electrode plate and a secondary battery was the same as example 1.

**Example 24:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.8}Na_{0.2}PF_6$. The electrolyte with a concentration of 1 M was prepared.

The preparation of a positive electrode plate, a negative electrode plate and a secondary battery was the same as example 1.

**Example 25:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.9}K_{0.1}PF_6$. The electrolyte with a concentration of 1 M was prepared.

The preparation of a positive electrode plate, a negative electrode plate and a secondary battery was the same as example 1.

**Example 26:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. Electrolyte salts in the electrolyte were $LiPF_6$ and $Li_{0.5}Na_{0.5}PF_6$. The mass ratio of $LiPF_6$ to $Li_{0.5}Na_{0.5}PF_6$ was 0.7 : 1. The electrolyte with a concentration of 1 M was prepared.

The preparation of a positive electrode plate, a negative electrode plate and a secondary battery was the same as example 1.

**Example 27:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. Electrolyte salts in the electrolyte were LiBOB and $Li_{0.5}K_{0.5}BOB$. The mass ratio of LiBOB to $Li_{0.5}K_{0.5}BOB$ was 0.8 : 1. The electrolyte with a concentration of 1 M was prepared.

The preparation of a positive electrode plate, a negative electrode plate and a secondary battery was the same as example 1.

**Comparative example 1:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $LiPF_6$, and an electrolyte with a concentration of 1 M was prepared.

The preparation of a positive electrode plate, a negative electrode plate and a secondary battery was the same as example 1.

**Comparative example 2:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was LiBOB, and an electrolyte with a concentration of 1 M was prepared.

The preparation of a positive electrode plate, a negative electrode plate and a secondary battery was the same as example 1.

**Comparative example 3:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was LiODFB. The electrolyte with a concentration of 1 M was prepared.

The preparation of a positive electrode plate, a negative electrode plate and a secondary battery was the same as example 1.

**Comparative example 4:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was LiTFOP. The electrolyte with a concentration of 1 M was prepared.

The preparation of a positive electrode plate, a negative electrode plate and a secondary battery was the same as example 1.

**Comparative example 5:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $LiPO_2F_2$. The electrolyte with a concentration of 1 M was prepared.

The preparation of a positive electrode plate, a negative electrode plate and a secondary battery was the same as example 1.

**Comparative example 6:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was LiTFSI. The electrolyte with a concentration of 1 M was prepared.

The preparation of a positive electrode plate, a negative electrode plate and a secondary battery was the same as example 1.

**Comparative example 7:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was LiFSI. The electrolyte with a concentration of 1 M was prepared.

The preparation of a positive electrode plate, a negative electrode plate and a secondary battery was the same as example 1.

**Comparative example 8:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was LiBODFP. The electrolyte with a concentration of 1 M was prepared.

The preparation of a positive electrode plate, a negative electrode plate and a secondary battery was the same as example 1.

**Comparative example 9:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. An electrolyte salt in the electrolyte was $Li_{0.4}Na_{0.5}K_{0.1}PF_6$, and an electrolyte with a concentration of 1 M was prepared.

The preparation of a positive electrode plate, a negative electrode plate and a secondary battery was the same as example 1.

**Comparative example 10:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. Electrolyte salts in the electrolyte were all $Li_{0.3}Na_{0.3}K_{0.4}PF_6$, and an electrolyte with a concentration of 1 M was prepared.

The preparation of a positive electrode plate, a negative electrode plate and a secondary battery was the same as example 1.

**Comparative example 11:**

Preparation of electrolyte of secondary battery: A mixture of ethylene carbonate (EC), propylene carbonate (PC) and diethyl carbonate (DEC) was used as an organic solvent, wherein the mass ratio of the components was EC : PC : DEC = 30 : 30 : 40. Electrolyte salts in the electrolyte were $LiPF_6$ and $Li_{0.5}Na_{0.3}K_{0.2}PF_6$. The mass ratio $LiPF_6$ to $Li_{0.5}Na_{0.3}K_{0.2}PF_6$ was 0.4 : 1, and an electrolyte with a concentration of 1 M was prepared.

The preparation of a positive electrode plate, a negative electrode plate and a secondary battery was the same as example 1.

**Cycling performance test:**

Conditions for cycling performance test of secondary batteries: At 25°C and 45°C, the secondary batteries were subjected to 1 C/1 C cyclic charge and discharge test; the charge and discharge voltage ranged from 2.8 V to 4.35 V; and the test was stopped when the capacity decayed to 80% of the initial specific discharge capacity (i.e., 80% SOH (state of health)). Herein, SOH is the health span of batteries, which characterized the percentage of the full charge capacity of secondary batteries relative to the rated capacity. The SOH of a newly manufactured secondary battery was 100%.

The secondary batteries of the above-mentioned examples and comparative examples were tested for the cycling performance, and the test results were shown in Table 1.

Table 1 Test data of cycling performance of secondary batteries of examples and comparative examples

| No. | Electrolyte salt | Cycle life at 25°C, 1C/1C, and 80% SOH | Cycle life at 45°C, 1C/1C, and 80% SOH |
|---|---|---|---|
| Example 1 | $Li_{0.5}Na_{0.3}K_{0.2}PF_6$ | 2800 cycles | 1500 cycles |
| Example 2 | $Li_{0.5}Na_{0.3}K_{0.2}BOB$ | 1500 cycles | 900 cycles |
| Example 3 | $Li_{0.5}Na_{0.3}K_{0.2}ODFB$ | 1700 cycles | 1100 cycles |
| Example 4 | $Li_{0.5}Na_{0.3}K_{0.2}TFOP$ | 1800 cycles | 1150 cycles |
| Example 5 | $Li_{0.5}Na_{0.3}K_{0.2}PO_2F_2$ | 1500 cycles | 950 cycles |
| Example 6 | $Li_{0.5}Na_{0.3}K_{0.2}TFSI$ | 1400 cycles | 850 cycles |
| Example 7 | $Li_{0.5}Na_{0.3}K_{0.2}FSI$ | 1300 cycles | 750 cycles |
| Example 8 | $Li_{0.5}Na_{0.3}K_{0.2}BODFP$ | 1200 cycles | 600 cycles |
| Example 9 | $Li_{0.7}Na_{0.2}K_{0.1}PF_6$ | 2600 cycles | 1300 cycles |
| Example 10 | $Li_{0.8}Na_{0.1}K_{0.1}PF_6$ | 2400 cycles | 1200 cycles |
| Example 11 | $Li_{0.9}Na_{0.05}K_{0.05}PF_6$ | 2200 cycles | 1100 cycles |
| Example 12 | $LiPF_6/Li_{0.5}Na_{0.3}K_{0.2}PF_6$; 0.7 : 1 | 2300 cycles | 1250 cycles |
| Example 13 | $LiBOB/Li_{0.5}Na_{0.3}K_{0.2}BOB$; 0.8 : 1 | 1200 cycles | 650 cycles |
| Example 14 | $LiODFB/Li_{0.5}Na_{0.3}K_{0.2}ODFB$; 0.9 : 1 | 1400 cycles | 750 cycles |
| Example 15 | $Li_{0.5}Na_{0.5}PF_6$ | 2780 cycles | 1500 cycles |
| Example 16 | $Li_{0.5}K_{0.5}BOB$ | 1500 cycles | 920 cycles |
| Example 17 | $Li_{0.5}Na_{0.5}ODFB$ | 1700 cycles | 1100 cycles |
| Example 18 | $Li_{0.5}K_{0.5}TFOP$ | 1800 cycles | 1120 cycles |
| Example 19 | $Li_{0.5}Na_{0.5}PO_2F_2$ | 1500 cycles | 950 cycles |
| Example 20 | $Li_{0.5}Na_{0.5}TFSI$ | 1400 cycles | 850 cycles |
| Example 21 | $Li_{0.5}K_{0.5}FSI$ | 1300 cycles | 750 cycles |
| Example 22 | $Li_{0.5}Na_{0.5}BODFP$ | 1200 cycles | 650 cycles |
| Example 23 | $Li_{0.7}K_{0.3}PF_6$ | 2600 cycles | 1250 cycles |
| Example 24 | $Li_{0.8}Nao_{0.2}PF_6$ | 2350 cycles | 1200 cycles |
| Example 25 | $Li_{0.9}K_{0.1}PF_6$ | 2200 cycles | 1100 cycles |
| Example 26 | $LiPF_6/Li_{0.5}Na_{0.5}PF_6$; 0.7 : 1 | 2280 cycles | 1250 cycles |
| Example 27 | $LiBOB/Li_{0.5}K_{0.5}BOB$; 0.8 : 1 | 1200 cycles | 680 cycles |
| Comparative Example 1 | $LiPF_6$ | 2000 cycles | 1000 cycles |
| Comparative Example 2 | LiBOB | 1000 cycles | 500 cycles |
| Comparative Example 3 | LiODFB | 1100 cycles | 600 cycles |
| Comparative Example 4 | LiTFOP | 1150 cycles | 640 cycles |
| Comparative Example 5 | $LiPO_2F_2$ | 1000 cycles | 500 cycles |
| Comparative Example 6 | LiTFSI | 900 cycles | 550 cycles |
| Comparative Example 7 | LiFSI | 750 cycles | 500 cycles |
| Comparative Example 8 | LiBODFP | 800 cycles | 400 cycles |
| Comparative Example 9 | $Li_{0.4}Na_{0.5}K_{0.1}PF_e$ | 1900 cycles | 950 cycles |
| Comparative Example 10 | $Li_{0.3}Na_{0.3}K_{0.4}PF_6$ | 1750 cycles | 800 cycles |
| Comparative Example 11 | $LiPF_6/Li_{0.5}Na_{0.3}K_{0.2}PF_6$; 0.4 : 1 | 1700 cycles | 900 cycles |

It can be seen from the test data of the cycling performance of the above-mentioned examples and comparative examples: in electrolytes of different lithium salts, in-situ doping of sodium or potassium ions at lithium sites can effectively improve the cycle life of batteries; and when the total proportion of doping ions in lithium salts is larger than a factor of 0.5, due to the large number of the doping ions in the lithium salts, the retention amount of Li is insufficient, which will lead to insufficient lithium consumption in the middle and later stages of cycling, thereby reducing the cycle life of batteries.

By replacing some of lithium sites in the lithium salts with sodium and potassium having larger ion radii, sodium and potassium ions and lithium ions occupy the same spatial position, have the same energy level, and are the same in terms of the motion trajectories of deintercalated ions during charging and discharging, and the doping sodium or potassium ions can effectively prevent Li/Ni intermixing of layered positive electrodes, thus improving the cycling performance. On the other hand, sodium ions and potassium ions in the alkali metal double salts facilitate to improve the composition of organic lithium in SEI when SEI films are being formed during initial charging and discharging.

It should be noted that the present application is not limited to the above embodiments. The above embodiments are exemplary only, and any embodiment that has substantially the same constitutions as the technical ideas and has the same effects within the scope of the technical solution of the present application is encompassed within the technical scope of the present application. In addition, without departing from the scope of the subject matter of the present application, various modifications that are conceivable to those skilled in the art and are applied to the embodiments and, and other modes constructed by combining some of the constituent elements of the embodiments are also encompassed within the scope of the present application.

**Claims**

1. An electrolyte, comprising an organic solvent and an electrolyte salt dissolved in the organic solvent,
   wherein the electrolyte salt comprises an alkali metal double salt, the alkali metal double salt containing lithium ions and at least one other alkali metal ion other than lithium ions.

2. The electrolyte according to claim 1, **characterized in that** the other alkali metal ion in the alkali metal double salt comprises sodium ions and potassium ions.

3. The electrolyte according to claim 1 or 2, **characterized in that** the alkali metal double salt contains both sodium ions and potassium ions.

4. The electrolyte according to any one of claims 1 to 3, **characterized in that** the alkali metal double salt comprises one or more of $Li_aNa_bK_cPF_6$, $Li_aNa_bK_cBOB$, $Li_aNa_bK_cODFB$, $Li_aNa_bK_cTFOP$, $Li_aNa_bK_cPO_2F_2$, $Li_aNa_bK_cTFSI$, $Li_aNa_bK_cFSI$, and $Li_aNa_bK_c$,
   wherein

$$a + b + c = 1, \text{ and } 0.5 \leq a < 1.$$

5. The electrolyte according to any one of claims 1 to 4, **characterized in that** the electrolyte salt further contains a basic lithium salt, the basic lithium salt comprising one or more of $LiPF_6$, LiBOB, LiODFB, LiTFOP, $LiPO_2F_2$, LiTFSI, LiFSI, and LiBODFP.

6. The electrolyte according to claim 5, **characterized in that** the mass ratio of the basic lithium salt to the alkali metal double salt in the electrolyte salt is X : 1,
   wherein

$$0.65 \leq X < 1.$$

7. The electrolyte according to claim 6, **characterized in that** $0.7 \leq X < 0.9$.

8. The electrolyte according to any one of claims 5 to 7, **characterized in that** the anion types of the basic lithium salt and the alkali metal double salt are the same.

9. The electrolyte according to any one of claims 1 to 8, **characterized in that** the concentration of the electrolyte salt in the electrolyte is 0.5 mol/L to 2 mol/L.

10. The electrolyte according to any one of claims 1 to 9, **characterized in that** the organic solvent comprises one or more of dimethyl carbonate, methyl ethyl carbonate, methyl propyl carbonate, methyl formate, methyl acetate, methyl butyrate, ethyl propionate, ethylene carbonate, propylene carbonate, and diethyl carbonate.

11. A secondary battery, comprising an electrolyte according to any one of claims 1 to 10.

12. The secondary battery according to claim 11, **characterized in that** a positive electrode active material in a positive electrode plate of the secondary battery is a positive electrode active material with a layered structure.

13. A battery module, **characterized by** comprising a secondary battery according to claim 11 or 12.

14. A battery pack, **characterized by** comprising a battery module according to claim 13.

15. A power consuming device, **characterized by** comprising at least one of a secondary battery according to claim 11 or 12, a battery module according to claim 13, or a battery pack according to claim 14.

5

FIG. 1

5

53

52
52

51

FIG. 2

**4**

FIG. 3

**1**

FIG. 4

**1**

FIG. 5

6

FIG. 6

## INTERNATIONAL SEARCH REPORT

| International application No. |
| --- |
| **PCT/CN2022/125847** |

| A. | CLASSIFICATION OF SUBJECT MATTER |
| --- | --- |
| | H01M10/0525(2010.01)i; H01M10/0568(2010.01)i |

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 锂离子电池, 电解质盐, 复盐, 锂离子, 钠离子, 钾离子, lithium battery, electrolyte salt, compound salt, lithium ion, sodium ion, potassium ion

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110931867 A (SHENZHEN INSTITUTE OF ADVANCED TECHNOLOGY) 27 March 2020 (2020-03-27) <br> description, paragraphs 2 and 24-54 | 1-2, 10-12, 15 |
| X | JP 2009054354 A (SONY CORP.) 12 March 2009 (2009-03-12) <br> description, paragraphs 2-53 | 1-15 |
| X | JP 2020027737 A (TOYOTA INDUSTRIES CORP.) 20 February 2020 (2020-02-20) <br> description, paragraphs 12-70 | 1-15 |
| X | JP H1027624 A (MATSUSHITA ELECTRIC INDUSTRIAL CO., LTD.) 27 January 1998 (1998-01-27) <br> description, paragraphs 2-31 | 1-15 |
| X | CN 106745096 A (JIUJIANG TINCI HIGH-TECH MATERIALS CO., LTD.) 31 May 2017 (2017-05-31) <br> description, paragraphs 2-22 | 1-4, 9-15 |
| A | KR 20150050082 A (LG CHEMICAL LTD.) 08 May 2015 (2015-05-08) <br> entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 June 2023** | **05 July 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/125847**

| Patent document cited in search report | | | Publication date (day/month/year) | Patent family member(s) | | | Publication date (day/month/year) |
|---|---|---|---|---|---|---|---|
| CN | 110931867 | A | 27 March 2020 | WO | 2021104059 | A1 | 03 June 2021 |
| JP | 2009054354 | A | 12 March 2009 | None | | | |
| JP | 2020027737 | A | 20 February 2020 | None | | | |
| JP | H1027624 | A | 27 January 1998 | JP | 3309719 | B2 | 29 July 2002 |
| CN | 106745096 | A | 31 May 2017 | None | | | |
| KR | 20150050082 | A | 08 May 2015 | KR | 101651143 | B1 | 25 August 2016 |

Form PCT/ISA/210 (patent family annex) (July 2022)